# EUROPEAN PATENT SPECIFICATION

(11) **EP 1 931 731 B1**
(45) Date of publication and mention of the grant of the patent: **02.03.2011**
(21) Application number: 06804090.6
(22) Date of filing: 25.09.2006
(51) Int. Cl.: C08L 23/10, C08L 23/04, C08K 5/00, C08L 23/14

(54) **PROPYLENE COPOLYMER COMPOSITIONS**
PROPYLENCOPOLYMERZUSAMMENSETZUNGEN
COMPOSITIONS COPOLYMERES DE PROPYLENE

(30) Priority: 04.10.2005 US 723523 P
(43) Date of publication of application: 18.06.2008
(73) Proprietor: Tyco Healthcare Group LP, Mansfield, MA 02048 (US)
(72) Inventor: GOHILL, Bharatkumar, B., Sanford, FL 32771 (US)
(74) Representative: Tomlinson, Edward James
(86) International application number: PCT/US2006/037162
(87) International publication number: WO 2007/044204

(56) References cited:
- WO-A-02/077092
- US-A- 5 342 868
- US-A1- 2003 096 993
- US-A1- 2005 113 517
- US-B1- 6 231 936
- US-B1- 6 231 936

## Description

### CROSS REFERENCE TO RELATED APPLICATIONS

This application claims the benefit of U.S. Provisional Patent Application No. 60/723,523 filed October 4, 2005.

### TECHNICAL FIELD

The present disclosure relates to improved propylene copolymer compositions. More particularly, the present disclosure relates to improved fast cycling, propylene-ethylene copolymer compositions which are sterilisable by high energy irradiation, e.g., gamma-irradiation, from a cobalt-60 source.

### BACKGROUND

It has proven extremely difficult to develop polymeric compositions which can meet the fast injection molding cycles required in current thermoforming operations and withstand gamma irradiation at levels necessary to effect sterilization. This is especially true with respect to injection molding of products with very little tooling draft angles and those products bearing large cylindrical surface areas such as encountered when injection molding syringe barrels. To date, success has only been achieved using non-clarified, gamma resistant homopolymer polypropylene. Currently available gamma grade clarified random copolymers have not been able to meet the fast cycling requirements encountered in the fabrication of syringe barrels with little or no taper.

Since syringes are generally sterilized prior to use by gamma irradiation, it is also necessary that the compositions used for syringe fabrication be resistant to gamma irradiation. Gamma irradiation, especially at the levels used for sterilization, e.g., up to about 40 kilograys (4 megarads), can result in molecular weight breakdown and deterioration of the product, e.g. embrittlement with resultant loss of ductility.

### SUMMARY

Accordingly, it is an object of the present disclosure to provide random propylene copolymer compositions which meet the fast injection molding cycle times currently required.

It is another object of the present disclosure to provide improved propylene copolymer compositions able to resist gamma irradiation in doses up to about 40 kGy, and exhibit subsequent resistance to autoclaving at about 132°C for about 8 minutes.

It is yet another object of the present disclosure to provide improved propylene copolymer compositions able to resist yellowing, i.e., Yellowing Index less than about 7.5, caused by gamma irradiation at doses up to about 40 kGy.

It is still another object of the present disclosure to provide improved propylene copolymer compositions with acceptable clarity for use in the medical industry, typically not greater than about 25% haze value.

These, as well as other objects and advantages are achieved by the present disclosure which provides fast cycling, gamma resistant propylene copolymer compositions comprising:
a propylene/ethylene copolymer comprising from about 2 to about 3.5 wt % ethylene;
from about about 800 ppm to about 1200 ppm of one or more light stabilizers;
from about 300 ppm to about 1200 ppm of one or more acid scavengers;
from about 1600 ppm to about 2200 ppm aluminum, hydroxybis[2,4,8,10 tetrakis (1,1-dimethyl(ethyl)-6-hydroxy-12H dibenzo[d,g][1,3,2] dioxaphoshocin 6-oxidato]; and
sufficient amount of one or more viscosity modifiers to break down the resulting polymer viscosity to the range of from about 23 to about 31g/10 minutes measured at about 230°C/2160g.

### DETAILED DESCRIPTION

The propylene copolymers employed in the present disclosure are random propylene copolymers comprising from about 2 to about 3.5 wt % ethylene and, in embodiments, from about 2.6 to about 3.2 wt % ethylene. The random propylene-ethylene copolymers of the present disclosure may be produced in the presence of a Ziegler-Natta catalyst employing known polymerization methods to obtain copolymers exhibiting a melt index of less than about 3 gms/10 minute measured at about 230°C/2160g. It is also preferred that the molecular weight distribution of the copolymers be less than about 5.5 ± 10%.

The propylene copolymer compositions of the present disclosure can also include light stabilizers to quench the effects of gamma rays, ultraviolet light, and the like. These stabilizers are also useful in controlling the thermal stability of the melt. Typical light stabilizers useful in the present disclosure include, for example, polymeric hindered amines, such as CHIMASSORB 994 (poly [[6-[( 1,1,3,3-tetramethylbutyl)amino-1,3,5 triazine-2,4-diyl][(2,2,6,6-tetramethyl-4-piperidinyl)imino]-1,6-hexanediyl[(2,2,6,6-tetramethyl-4-piperidinyl)imino]] (sometimes referred to herein as C944, which is commercially available from Ciba-Geigy); TINUVIN 622 (a combination of dimethyl succinate and tetramethyl hydroxy-1-hydroxyethyl piperidine polymer) (sometimes referred to herein as T622, which is commercially available from Ciba-Geigy); FIBERSTAB 410, a non-phenolic processing stabilizer system composed of oxidized bis (hydrogenated tallow alkyl) amines and a high molecular weight hindered amine (CHIMASSORB 944) in a 1:1 weight ratio (sometimes referred to herein as FS410, which is commercially available from Ciba Specialty Chemicals), combinations thereof, and the like. Light stabilizers can be present in the compositions of the present disclosure in amounts from about 800 ppm to about 1200 ppm (parts per million of polymer) and in embodiments, from about 900 ppm to about 1100 ppm.

It may be desirable that the syringe barrels fabricated from the compositions of the present disclosure be substantially transparent. It has now been found that when the clarifier, NA-21 (aluminum, hydroxybis [2,4,8,10 tetrakis (1,1-dimethyl(ethyl)-6-hydroxy-12H dibenzo [d,g][1,3,2] dioxaphoshocin 6-oxidato]) (available from Askai Denka Kogyou Kiki), is incorporated in the composition in amounts ranging from about 1600 ppm to about about 2200 ppm, and in embodiments, from about 1800 ppm to 2000 ppm, not only are substantially transparent syringe barrels obtained but also the injection molding cycle time may be significantly reduced.

Polyolefin polymerization effected in the presence of Ziegler-Natta catalyst systems can result in acidic residues in the polymer. Consequently, it is considered advantageous to incorporate acid scavengers in the polymeric composition to prevent the formation of or neutralize any acidic residues therein. Suitable acid scavengers include calcium stearate (CaSt), synthetic hydrotalcite, e.g., DHT-4V (available from Kyowa Chemical Industry, Co., Ltd.), and the like. The acid scavenger can be incorporated in the polymeric composition in amounts ranging from about 300 ppm to about 1200 ppm. In embodiments, when acid scavengers such as calcium stearate are employed, they may be employed in amounts advantageously ranging from about 800 ppm to about 1200 ppm; whereas, when synthetic hydrotalcites are employed, they may be employed in amounts ranging from about 300 ppm to about 500 ppm.

In order to meet the currently required fast injection molding cycle times, i.e., a cycle time generally less than or equal to about 18 seconds, it is considered advantageous to break down the viscosity of the resulting polymeric composition from an initial melt index of about 3 g/10 minute or less to a melt index ranging from about 23 to about 31 gms/10 minutes (measured at about 230° C/2160 g). To effect such viscosity breakdown, organic peroxides such as LUPERSOL 101 (2,5-dimethyl 2,5-di(tert-butyl peroxy) hexane (available from the Lucido Division of Pennwalt Corp.) can be added to the polymeric composition post polymerization as may be needed to achieve the desired viscosity breakdown.

It has been found in accordance with the present disclosure that when the foregoing additives are admixed with the propylene copolymer compositions employing methods well known to those skilled in the art, such as through use of a Brabender plastograph, a Banbury mixer, or the like, and then injection molded to form syringe components such as syringe barrels and/or plungers, fast injection molding cycles may be achieved despite these products exhibiting very little tooling draft angles and large cylindrical surface areas. Moreover, the compositions of the present disclosure may be non-toxic, substantially transparent i.e., exhibit acceptable clarity for use in the medical industry, typically not greater than about 20% haze value, and exhibit gamma irradiation resistance up to about 40 kGy. Other gamma grade random copolymers have not been able to meet the fast cycling requirements for syringe barrels with little or no taper.

The propylene copolymer compositions of the present disclosure can also include other additives, if desired, such as antioxidants, nucleating agents, fillers, reinforcing agents, plasticizers, lubricants, pigments, rheology additives, flow-control agents, optical brighteners, antistatic agents, and the like.

The following examples further illustrate the present disclosure but should not be construed in limitation thereof. All percentages and parts are by weight unless otherwise stated.

### EXAMPLES 1 TO 6

Using a high speed powder mixer, random propylene copolymer base flake was admixed with various amounts of powdered additives to yield the respective formulations specified in the accompanying Table 1 below. Each formulation was heated to melt the polymer, and for the viscosity-broken grades, the requisite amount of organic peroxide was added to produce pellets at 30MF. The pellets were molded into custom plaques and irradiated using a controlled research loop in a commercial cobalt-60 gamma irradiator.

**Table 1**

| Additive Formulations (% by weight of polymer) | | | | | | |
|---|---|---|---|---|---|---|
| | Acid Scavenger | Light Stabilizer | Light Stabilizer | Clarifier | Starting Melt Index | Ethylene levels (%) |
| Example 1 | 0.1% CaSt | 0.1% T622 | 0.1% C944 | 0.2% M3988¹ | 30 | 2.2 |
| Example 2 | 0.1% CaSt | 0.1% T622 | 0.1% C944 | 0.2% M3988 | 30 | 3.1 |
| Example 3 | 0.1% CaSt | 0.1% T622 | 0.1% C944 | 0.2% M3988 | 2.1 | 2.1 |
| Example 4 | 0.1% CaSt | 0.1% T622 | 0.1% C944 | 0.2% M3988 | 2.7 | 2.7 |
| Example 5 | 0.1% CaSt | 0.1% T622 | 0.1% C944 | 0.2% NA-21 | 2.7 | 2.7 |
| Example 6 | 0.04% DHT4-V | 0.1% FS410 | ------ | 0.2% NA-21 | 2.0 | 2.8 |

| | | | | | | |
|---|---|---|---|---|---|---|
| ¹ M3988 = 3,4 dimethylbenzylidine sorbitol available from Milliken Chemicals, Spartanburg, SC. | | | | | | |

Examples 1 to 4 were compositions placed in a screening process for gamma irradiation stability at about 29 kGy to pick the best compositions for further higher dose testing. Examples 5 and 6 correspond to the best of these compositions but the clarifier/nucleator used therein was changed to NA-21. The compositions of Examples 5 and 6 were then subjected to gamma irradiation at about 40 kGy. The plaque bend test is a screening technique useful to measure embrittlement of propylene polymers, however, it is a relative unit of measurement and no absolute numbers or angles to break are considered as having failed gamma irradiation.

### EXAMPLE 1

A reactor grade propylene copolymer at 2.2% ethylene level having the composition set forth in the above Table was gamma irradiated to 29 kGy in air. Following irradiation and 9 months of ambient aging, the plaque samples were bent to 135° with average angle to break recording 42°. Non-irradiated samples bent to 135°.

### EXAMPLE 2

A reactor grade propylene copolymer at 3.1% ethylene level having the composition set forth in the above Table was gamma irradiated to 29 kGy in air. Following irradiation and 9 months of ambient aging, the plaque samples were bent to 135° with average angle to break recording 85°. Non-irradiated samples bent to 135°.

### EXAMPLE 3

A reactor grade Propylene copolymer at 2.1% ethylene level having the composition set forth in the above Table was viscosity-broken to a melt index of 30 and gamma irradiated to 29 kGy in air. Following irradiation and 9 months of ambient aging, the plaque samples were bent to 135° with average angle to break recording 104°. Non-irradiated samples bent to 135°.

### EXAMPLE 4

A reactor grade propylene copolymer at 2.7% ethylene level having the composition set forth in the above Table was gamma irradiated to 29 kGy in air. Following irradiation and 6 months of ambient aging, the plaque samples were bent to 135° and none of the specimens broke. Non-irradiated samples bent to 135°.

### EXAMPLE 5

A reactor grade propylene copolymer at 2.7% ethylene level having the composition set forth in the above Table was viscosity-broken to a melt index of 30 and gamma irradiated to 40 kGy in air. Following irradiation and 9 months of ambient aging, the plaque samples were bent to 135° with an average angle to break recording 58°. Non-irradiated samples bent to 135°. The Yellowness Index (ASTM E313 using a BYK Gardner "Color View" machine) measured at 5.18 and the % Haze (ASTM D1003-plaque sample at 0.040" thickness measured using a BYK Gardner "Haze-Gard Plus" model) was 16.4%.

### EXAMPLE 6

A reactor grade propylene copolymer at 2.8% ethylene level having the composition set forth in the above Table was gamma irradiated to 40 kGy in air. Following irradiation and 9 months of ambient aging, the plaque samples were bent to 135° with an average angle to break recording 43°. Non-irradiated bent to 135°. The Yellowing Index measured at 4.96 and the Haze Value was 13.4%.

### EXAMPLE 7

Propylene copolymer compositions as described in Examples 4, 5 and 6 were tested for high speed moldability using a 32 cavity production mold to produce 35ml syringe barrels in an automatic cycle. The resin composition as described in Example 4 would cycle at 21.1 seconds, while the resin compositions of Examples 5 and 6 would cycle at 17.7 seconds and 18 seconds, respectively. The injection molding cycle dictated by production was less than or equal to 18 seconds. It was quite evident that the resin composition of Example 5 would produce barrels without any molding disruptions or hang-ups of parts in the mold cavity with longer production runs, i.e., all 32 parts were demolded and ejected out of the cavities at each shot. Resin compositions of Example 4, however, had difficulty in maintaining a fast cycle as parts hung-up (remained behind) in the cavity and were not ejected. This led to scuffing of the hung-up barrels when the next molding cycle brought the cores back into the cavities. This phenomena lead to poor quality and unacceptable barrels and risked entire lot rejection as scuffed barrels could be on their route to full assembly stations. The composition with the sorbitol base clarifier had to be cycled slower to 21.1 seconds to maintain high quality and produce clean barrels. Maintaining a fast cycle of 18 seconds or less would amounts to an increase in productivity up to 5 millions parts per year.

It will be understood that the present disclosure, while described in reference to the fabrication of syringe components, may be used for injection molding and other thermoforming operations to prepare other specific forms of molded products, sheets or films without departing from the scope or spirit of the present disclosure. The presently disclosed embodiments, therefore, are to be considered as illustrative and not restrictive, and the invention is not to be limited to the details set forth herein.

## Claims

1. Gamma irradiation resistant propylene/ethylene copolymer compositions comprising:
i) a propylene/ethylene copolymer comprising from about 2 to about 3.5 wt. % ethylene;
ii) from about 800 ppm to about 1200 ppm of one or more light stabilizers;
iii) from about 300 ppm to about 1200 ppm of one or more acid scavengers;
iv) from about 1600 ppm to about 2200 ppm of aluminum, hydroxybis[2,4,8,10 tetrakis (1,1-dimethyl(ethyl)-6-hydroxy-12H dibenzo[d,g][1,3,2] dioxaphoshocin 6-oxidato]; and
v) a sufficient amount of one or more viscosity modifiers to break down the resulting polymer viscosity to a melt index from about 23 to about 31 g/10 minutes measured at about 230°C/2160g.

2. Propylene/ethylene copolymer compositions according to claim 1, wherein the ethylene content ranges from about 2.6 to about 3.2 wt % ethylene.

3. Propylene /ethylene copolymer compositions according to claim 1, wherein the copolymer is a random copolymer produced in the presence of a Ziegler-Natta catalyst.

4. Propylene/ethylene copolymer compositions according to lain 1 initially exhibiting a melt index of less than about 3g/10 minutes measured at 230°C/2160g.

5. Propylene/ethylene copolymer compositions according to claim 1, wherein the molecular weight distribution of the copolymer is less than about 5.5 ± 10%.

6. Propylene/ethylene copolymer compositions according to claim 1, wherein the light stabilizer comprises one or more polymeric hindered amines.

7. Propylene/ethylene copolymer compositions according to claim 6, wherein the light stabilizer comprises poly [[6-[( 1,1,3,3-tetramethylbutyl)amino-1,3,5 triazine-2,4-diyl][(2,2,6,6-tetramethyl-4-piperidinyl)imino]-1,6-hexanediyl[(2,2,6,6-tetramethyl-4-piperidinyl)imino]].

8. Propylene/ethylene copolymer compositions according to claim 6, wherein the light stabilizer comprises a combination of dimethyl succinate and tetramethyl hydroxy-1-hydroxyethyl piperidine polymer.

9. Propylene/ethylene copolymer compositions according to claim 6, wherein the light stabilizer comprises oxidized bis (hydrogenated tallow alkyl) amine and poly [[6-[( 1,1,3,3-tetramethylbutyl)amino-1,3,5 triazine-2,4-diyl][(2,2,6,6-tetramethyl-4-piperidinyl)imino]-1,6-hexanediyl[(2,2,6,6-tetramethyl-4-piperidinyl)imino]] at a 1:1 ratio.

10. Propylene/ethylene copolymer compositions according to claim 6, wherein the light stabilizer comprises poly [[6-[( 1,1,3,3-tetramethyl/butyl)amino-1,3,5 triazine-2,4-diyl][(2,2,6,6-tetramethyl-4-piperidinyl)imino]-1,6-hexanediyl[(2,2,6,6-tetramethyl-4-piperidinyl)imino]], dimethyl succinate, and tetramethyl hydroxy-1-hydroxyethyl piperidine polymer.

11. Propylene/ethylene copolymer compositions according to claim 1, wherein the acid scavenger comprises calcium stearate.

12. Propylene/ethylene copolymer compositions according to claim 11, wherein the calcium stearate content ranges from about 800 ppm to about 1200 ppm.

13. Propylene/ethylene copolymer compositions according to claim 1, wherein the acid scavenger comprises synthetic hydrotalcite.

14. Propylene/ethylene copolymer compositions according to claim 13, wherein the synthetic hydrotalcite content ranges from about 300 ppm to about 500 ppm.

15. Propylene/ethylene copolymer compositions according to claim 1, wherein the viscosity modifier comprises (2,5-dimethyl 2,5-di(tert-butyl peroxy) hexane.

16. Propylene/ethylene copolymer compositions according to claim 1, wherein the aluminum, hydroxybis[2,4,8,10 tetrakis (1,1-dimethyl(ethyl)-6-hydroxy-12H dibenzo[d,g][1,3,2] dioxaphoshocin 6-oxidato], content ranges from about 1800 ppm to about 2000 ppm.

17. Propylene/ethylene copolymer compositions comprising:
i) a propylene/ethylene copolymer comprising from about 2 to about 3.5 wt. % ethylene;
ii) from about 800 ppm to about 1200 ppm calcium stearate;
iii) from about 800 ppm to about 1200 ppm of a combination of dimethyl succinate and tetramethyl hydroxy-1-hydroxyethyl piperidine polymer;
iv) from about 800 ppm to about 1200 ppm of poly [[6-[( 1,1,3,3-tetramethylbutyl)amino-1,3,5 triazine-2,4-diyl][(2,2,6,6-tetramethyl-4-piperidinyl)imino]-1,6-hexanediyl[(2,2,6,6-tetramethyl-4-piperidinyl)imino]];
v) from about 1600 ppm to about 2200 pm of aluminum, hydroxybis [2,4,8,10 tetrakis (1,1-dimethyl(ethyl)-6-hydroxy-12H dibenzo [d,g][1,3,2] dioxaphoshocin 6-oxidato]; and
vi) a sufficient amount of (2,5-dimethyl 2,5-di(tert-butyl peroxy) hexane to break down the resulting polymer viscosity to a melt index from about 23 to about 31 g/10 minutes measured at 230°C/2160g.

18. Propylene/ethylene copolymer compositions according to claim 17 wherein the propylene/ethylene copolymer is a Ziegler-Natta catalyst polymerized random copolymer comprising from about 2.6 to about 3.2 wt % ethylene.

19. Propylene/ethylene copolymer compositions according to claim 18 wherein the initial melt index is less than about 3g/10 minutes measured at 230°C/2160g, and the molecular weight distribution of the copolymer is less than about 5.5 ± 10%.

20. Propylene/ethylene copolymer compositions comprising:
i) a propylene/ethylene copolymer comprising from about 2 to about 3.5 wt. % ethylene;
ii) from about 300 ppm to about 500 ppm synthetic hydrotalcite;
iii) from about 800 ppm to about 1200 ppm oxidized bis (hydrogenated tallow alkyl) amine and poly [[6-[( 1,1,3,3-tetramethylbutyl)amino-1,3,5 triazine-2,4-diyl][(2,2,6,6-tetramethyl-4-piperidinyl)imino]-1,6-hexanediyl[(2,2,6,6-tetramethyl-4-piperidinyl)imino]] at a 1:1 ratio;
iv) from about 1600 ppm to about 2200 ppm of aluminum, hydroxybis[2,4,8,10 tetrakis (1,1-dimethyl(ethyl)-6-hydroxy-12H dibenzo[d,g][1,3,2] dioxaphoshocin 6-oxidato]; and
v) a sufficient amount of (2,5-dimethyl 2,5-di(tert-butyl peroxy) hexane to break down the resulting polymer viscosity to a melt index from about 23 to about 31 g/10 minutes measured at 230°C/2160g.

21. Propylene/ethylene copolymer compositions according to claim 20 wherein the propylene/ethylene copolymer is a Ziegler-Natta catalyst polymerized random copolymer comprising from about 2.6 to about 3.2 wt % ethylene.

22. Propylene/ethylene copolymer compositions according to claim 21 wherein the initial melt index is less than about 3g/10 minutes measured at 230°C/2160g, and the molecular weight distribution of the copolymer is less than about 5.5 ± 10%.

23. A syringe assembly comprising a syringe barrel and a syringe plunger adapted to travel within said barrel, wherein said barrel and optionally said plunger are fabricated from the propylene/ethylene copolymer composition of claim 1.

24. A syringe assembly comprising a syringe barrel and a syringe plunger adapted to travel within said barrel, wherein said barrel and optionally said plunger are fabricated from the propylene/ethylene copolymer composition of claim 17.

25. A syringe assembly comprising a syringe barrel and a syringe plunger adapted to travel within said barrel, wherein said barrel and optionally said plunger are fabricated from the propylene/ethylene copolymer composition of claim 20.

## Patentansprüche

1. Gegenüber Gamma-Strahlung beständige Propylen/Ethylen-Copolymerzusammensetzungen, umfassend:
i) ein Propylen/Ethylen-Copolymer mit etwa 2 bis etwa 3,5 Gew.-% Ethylen;
ii) etwa 800 ppm bis etwa 1200 ppm eines oder mehrerer Lichtschutzmittel;
iii) etwa 300 ppm bis etwa 1200 ppm eines oder mehrerer Säurefänger;
iv) etwa 1600 ppm bis etwa 2200 ppm Aluminium, Hydroxybis[2,4,8,10-tetrakis(1,1-dimethyl(ethyl)-6-hydroxy-12H-dibenzo[d,g][1,3,2]dioxaphosphocin-6-oxidato], und
v) eine zur Herabsetzung der resultierenden Polymerviskosität auf einen Schmelzindex von etwa 23 bis etwa 31 g/10 Minuten, gemessen bei etwa 230°C/2160 g, ausreichende Menge eines oder mehrerer Viskositätsmodifikatoren.

2. Propylen/Ethylen-Copolymerzusammensetzungen nach Anspruch 1, wobei der Ethylengehalt im Bereich von etwa 2,6 bis etwa 3,2 Gew.-% Ethylen liegt.

3. Propylen/Ethylen-Copolymerzusammensetzungen nach Anspruch 1, wobei es sich bei dem Copolymer um ein in Gegenwart eines Ziegler-Natta-Katalysators hergestelltes statistisches Copolymer handelt.

4. Propylen/Ethylen-Copolymerzusammensetzungen nach Anspruch 1, die anfänglich einen Schmelzindex von weniger als etwa 3 g/10 Minuten, gemessen bei 230°C/2160 g, aufweisen.

5. Propylen/Ethylen-Copolymerzusammensetzungen nach Anspruch 1, wobei die Molekulargewichtsverteilung des Copolymers weniger als etwa 5,5 ± 10% beträgt.

6. Propylen/Ethylen-Copolymerzusammensetzungen nach Anspruch 1, wobei das Lichtschutzmittel ein oder mehrere polymere gehinderte Amine umfaßt.

7. Propylen/Ethylen-Copolymerzusammensetzungen nach Anspruch 6, wobei das Lichtschutzmittel Poly[[6-[(1,1,3,3-tetramethylbutyl)amino-1,3,5-triazin-2,4-diyl][(2,2,6,6-tetramethyl-4-piperidinyl)-imino]-1,6-hexandiyl[(2,2,6,6-tetramethyl-4-piperidinyl)imino]] umfaßt.

8. Propylen/Ethylen-Copolymerzusammensetzungen nach Anspruch 6, wobei das Lichtschutzmittel eine Kombination von Dimethylsuccinat und Tetramethyl-hydroxy-1-hydroxyethylpiperidin-Polymer umfaßt.

9. Propylen/Ethylen-Copolymerzusammensetzungen nach Anspruch 6, wobei das Lichtschutzmittel oxidiertes Bis(hydriertes Talgalkyl)amin und Poly[[6-[(1,1,3,3-tetramethylbutyl)amino-1,3,5-triazin-2,4-diyl][(2,2,6,6-tetramethyl-4-piperidinyl)-imino]-1,6-hexandiyl[(2,2,6,6-tetramethyl-4-piperidinyl)imino]] im Verhältnis 1:1 umfaßt.

10. Propylen/Ethylen-Copolymerzusammensetzungen nach Anspruch 6, wobei das Lichtschutzmittel Poly[[6-[(1,1,3,3-tetramethylbutyl)amino-1,3,5-triazin-2,4-diyl][(2,2,6,6-tetramethyl-4-piperidinyl)-imino]-1,6-hexandiyl[(2,2,6,6-tetramethyl-4-piperidinyl)imino]], Dimethylsuccinat und Tetramethylhydroxy-1-hydroxyethylpiperidin-Polymer umfaßt.

11. Propylen/Ethylen-Copolymerzusammensetzungen nach Anspruch 1, wobei der Säurefänger Calciumstearat umfaßt.

12. Propylen/Ethylen-Copolymerzusammensetzungen nach Anspruch 11, wobei der Calciumstearatgehalt im Bereich von etwa 800 ppm bis etwa 1200 ppm liegt.

13. Propylen/Ethylen-Copolymerzusammensetzungen nach Anspruch 1, wobei der Säurefänger synthetischen Hydrotalcit umfaßt.

14. Propylen/Ethylen-Copolymerzusammensetzungen nach Anspruch 13, wobei der Gehalt an synthetischem Hydrotalcit im Bereich von etwa 300 ppm bis etwa 500 ppm liegt.

15. Propylen/Ethylen-Copolymerzusammensetzungen nach Anspruch 1, wobei der Viskositätsmodifikator (2,5-Dimethyl-2,5-di(tert.-butylperoxy)hexan umfaßt.

16. Propylen/Ethylen-Copolymerzusammensetzungen nach Anspruch 1, wobei der Gehalt an Aluminium, Hydroxybis[2,4,8,10-tetrakis(1,1-dimethyl(ethyl)-6-hydroxy-12H-dibenzo[d,g] [1,3,2]dioxaphosphocin-6-oxidato], im Bereich von etwa 1800 ppm bis etwa 2000 ppm liegt.

17. Propylen/Ethylen-Copolymerzusammensetzungen, umfassend:
i) ein Propylen/Ethylen-Copolymer mit etwa 2 bis etwa 3,5 Gew.-% Ethylen;
ii) etwa 800 ppm bis etwa 1200 ppm Calciumstearat;
iii) etwa 800 ppm bis etwa 1200 ppm einer Kombination von Dimethylsuccinat und Tetramethylhydroxy-1-hydroxyethylpiperidin-Polymer;
iv) etwa 800 ppm bis etwa 1200 ppm Poly[[6-[(1,1,3,3-tetramethylbutyl)amino-1,3,5-triazin-2,4-diyl] [(2,2,6,6-tetramethyl-4-piperidinyl)-imino]-1,6-hexandiyl[(2,2,6,6-tetramethyl-4-piperidinyl)imino]];
v) etwa 1600 ppm bis etwa 2200 ppm Aluminium, Hydroxybis(2,4,8,10-tetrakis(1,1-dimethyl(ethyl)-6-hydroxy-12H-dibenzo[d,g][1,3,2]dioxaphosphocin-6-oxidato], und
vi) eine zur Herabsetzung der resultierenden Polymerviskosität auf einen Schmelzindex von etwa 23 bis etwa 31 g/10 Minuten, gemessen bei 230°C/2160 g, ausreichende Menge (2,5-Dimethyl-2,5-di(tert.-butylperoxy)hexan.

18. Propylen/Ethylen-Copolymerzusammensetzungen nach Anspruch 17, wobei es sich bei dem Propylen/Ethylen-Copolymer um ein in Gegenwart eines Ziegler-Natta-Katalysators polymerisiertes statistisches Copolymer mit etwa 2,6 bis etwa 3,2 Gew.-% Ethylen handelt.

19. Propylen/Ethylen-Copolymerzusammensetzungen nach Anspruch 18, wobei der anfängliche Schmelzindex weniger als etwa 3 g/10 Minuten, gemessen bei 230°C/2160 g, beträgt und die Molekulargewichtsverteilung des Copolymers weniger als etwa 5,5 ± 10% beträgt.

20. Propylen/Ethylen-Copolymerzusammensetzungen, umfassend:
i) ein Propylen/Ethylen-Copolymer mit etwa 2 bis 3,5 Gew.-% Ethylen;
ii) etwa 300 ppm bis etwa 500 ppm synthetischen Hydrotalcit;
iii) etwa 800 ppm bis etwa 1200 ppm oxidiertes Bis(hydriertes Talgalkyl)amin und Poly[[6-[(1,1,3,3-tetramethylbutyl)amino-1,3,5-triazin-2,4-diyl][(2,2,6,6-tetramethyl-4-piperidinyl)-imino]-1,6-hexandiyl[(2,2,6,6-tetramethyl-4-piperidinyl)imino]] im Verhältnis 1:1;
iv) etwa 1600 ppm bis etwa 2200 ppm Aluminium, Hydroxybis[2,4,8,10-tetrakis(1,1-dimethyl(ethyl)-6-hydroxy-12H-dibenzo[d,g][1,3,2]dioxaphosphocin-6-oxidato], und
v) eine zur Herabsetzung der resultierenden Polymerviskosität auf einen Schmelzindex von etwa 23 bis etwa 31 g/10 Minuten, gemessen bei 230°C/2160 g, ausreichende Menge (2,5-Dimethyl-2,5-di(tert.-butylperoxy)hexan.

21. Propylen/Ethylen-Copolymerzusammensetzungen nach Anspruch 20, wobei es sich bei dem Propylen/Ethylen-Copolymer um ein in Gegenwart eines Ziegler-Natta-Katalysators polymerisiertes statistisches Copolymer mit etwa 2,6 bis etwa 3,2 Gew.-% Ethylen handelt.

22. Propylen/Ethylen-Copolymerzusammensetzungen nach Anspruch 21, wobei der anfängliche Schmelzindex weniger als etwa 3 g/10 Minuten, gemessen bei 230°C/2160 g, beträgt und die Molekulargewichtsverteilung des Copolymers weniger als etwa 5,5 ± 10% beträgt.

23. Spritzenanordnung mit einem Spritzenzylinder und einem Spritzenkolben, der so ausgeführt ist, daß er sich in dem Zylinder bewegen kann, wobei der Zylinder und gegebenenfalls der Kolben aus der Propylen/Ethylen-Copolymerzusammensetzung nach Anspruch 1 bestehen.

24. Spritzenanordnung mit einem Spritzenzylinder und einem Spritzenkolben, der so ausgeführt ist, daß er sich in dem Zylinder bewegen kann, wobei der Zylinder und gegebenenfalls der Kolben aus der Propylen/Ethylen-Copolymerzusammensetzung nach Anspruch 17 bestehen.

25. Spritzenanordnung mit einem Spritzenzylinder und einem Spritzenkolben, der so ausgeführt ist, daß er sich in dem Zylinder bewegen kann, wobei der Zylinder und gegebenenfalls der Kolben aus der Propylen/Ethylen-Copolymerzusammensetzung nach Anspruch 20 bestehen.

## Revendications

1. Compositions de copolymère propylène/éthylène résistant à l'irradiation gamma comprenant :
i) un copolymère propylène/éthylène comprenant environ 2 à environ 3,5 % en poids d'éthylène ;
ii) environ 800 ppm à environ 1200 ppm d'un ou plusieurs photostabilisants ;
iii) environ 300 ppm à environ 1200 ppm d'un ou plusieurs capteurs d'acide ;
iv) environ 1600 ppm à environ 2200 ppm d'hydroxybis[2,4,8,10-tétrakis(1,1-dïméthyl(éthyl))-6-hydroxy-12H-dibenzo[d,g][1,3,2]dioxaphosphocin-6-oxidato]aluminium ; et
v) une quantité suffisante d'un ou plusieurs modificateurs de viscosité pour réduire la viscosité du polymère résultant à un indice de fluidité d'environ 23 à environ 31 g/10 minutes mesuré à environ 230 °C/2160 g.

2. Compositions de copolymère propylène/éthylène selon la revendication 1, dans lesquelles la teneur en éthylène varie d'environ 2,6 à environ 3,2 % en poids d'éthylène.

3. Compositions de copolymère propylène/éthylène selon la revendication 1, dans lesquelles le copolymère est un copolymère statistique produit en présence d'un catalyseur de Ziegler-Natta.

4. Compositions de copolymère propylène/éthylène selon la revendication 1 présentant initialement un indice de fluidité inférieur à environ 3 g/10 minutes mesuré à 230 °C/2160 g.

5. Compositions de copolymère propylène/éthylène selon la revendication 1, dans lesquelles la distribution de masse moléculaire du copolymère est inférieure à environ 5,5 ± 10 %.

6. Compositions de copolymère propylène/éthylène selon la revendication 1, dans lesquelles le photostabilisant comprend une ou plusieurs amines polymères stériquement encombrées.

7. Compositions de copolymère propylène/éthylène selon la revendication 6, dans lesquelles le photostabilisant comprend du poly{[6-[(1,1,3,3-tétraméthylbutyl)amino]-1,3,5-triazine-2,4-diyl][(2,2,6,6-tétraméthyl-4-pipéridinyl)imino]-1,6-hexanediyl-[(2,2,6,6-tétraméthyl-4-pipéridinyl)imino]}.

8. Compositions de copolymère propylène/éthylène selon la revendication 6, dans lesquelles le photostabilisant comprend une combinaison de succinate de diméthyle et d'un polymère de tétraméthyl-hydroxy-1-hydroxyéthyl-pipéridine.

9. Compositions de copolymère propylène/éthylène selon la revendication 6, dans lesquelles le photostabilisant comprend une bis(alkyl de suif hydrogéné)amine oxydée et du poly{[6-[(1,1,3,3-tétraméthylbutyl)amino]-1,3,5-triazine-2,4-diyl][(2,2,6,6-tétraméthyl-4-pipéridinyl)imino]-1,6-hexanediyl-[(2,2,6,6-tétraméthyl-4-pipéridinyl)imino]} dans un rapport de 1:1.

10. Compositions de copolymère propylène/éthylène selon la revendication 6, dans lesquelles le photostabilisant comprend du poly{[6-[(1,1,3,3-tétraméthylbutyl)amino]-1,3,5-triazine-2,4-diyl][(2,2,6,6-tétraméthyl-4-pipéridinyl)imino]-1,6-hexanediyl-[(2,2,6,6-tétraméthyl-4-pipéridinyl)imino]}, du succinate de diméthyle, et un polymère de tétraméthyl-hydroxy-1-hydroxyéthyl-pipéridine.

11. Compositions de copolymère propylène/éthylène selon la revendication 1, dans lesquelles le capteur d'acide comprend du stéarate de calcium.

12. Compositions de copolymère propylène/éthylène selon la revendication 11, dans lesquelles la teneur en stéarate de calcium varie d'environ 800 ppm à environ 1200 ppm.

13. Compositions de copolymère propylène/éthylène selon la revendication 1, dans lesquelles le capteur d'acide comprend de l'hydrotalcite synthétique.

14. Compositions de copolymère propylène/éthylène selon la revendication 13, dans lesquelles la teneur en hydrotalcite synthétique varie d'environ 300 ppm à environ 500 ppm.

15. Compositions de copolymère propylène/éthylène selon la revendication 1, dans lesquelles le modificateur de viscosité comprend du 2,5-diméthyl-2,5-di(tert-butylperoxy)hexane.

16. Compositions de copolymère propylène/éthylène selon la revendication 1, dans lesquelles la teneur en hydroxybis[2,4,8,10-tétrakis(1,1-diméthyl(éthyl))-6-hydroxy-12H-dibenzo[d,g][1,3,2]dioxaphosphocin-6-oxidato]aluminium varie d'environ 1800 ppm à environ 2000 ppm.

17. Compositions de copolymère propylène/éthylène comprenant :
i) un copolymère propylène/éthylène comprenant environ 2 à environ 3,5 % en poids d'éthylène ;
ii) environ 800 ppm à environ 1200 ppm de stéarate de calcium ;
iii) environ 800 ppm à environ 1200 ppm d'une combinaison de succinate de diméthyle et d'un polymère de tétraméthyl-hydroxy-1-hydroxyéthyl-pipéridine ;
iv) environ 800 ppm à environ 1200 ppm de poly{[6-[(1,1,3,3-tétraméthylbutyl)amino]-1,3,5-triazine-2,4-diyl][(2,2,6,6-tétraméthyl-4-pipéridinyl)imino]-1,6-hexanediyl-[(2,2,6,6-tétraméthyl-4-pipéridinyl)imino]} ;
v) environ 1600 ppm à environ 2200 ppm d'hydroxybis[2,4,8,10-tétrakis(1,1-diméthyl(éthyl))-6-hydroxy-12H-dibenzo[d,g][1,3,2]dioxaphosphocin-6-oxidato]aluminium ; et
vi) une quantité suffisante de 2,5-diméthyl-2,5-di(tert-butylperoxy)hexane pour réduire la viscosité du polymère résultant à un indice de fluidité d'environ 23 à environ 31 g/10 minutes mesuré à 230 °C/2160 g.

18. Compositions de copolymère propylène/éthylène selon la revendication 17, dans lesquelles le copolymère propylène/éthylène est un copolymère statistique polymérisé en présence d'un catalyseur de Ziegler-Natta comprenant environ 2,6 à environ 3,2 % en poids d'éthylène.

19. Compositions de copolymère propylène/éthylène selon la revendication 18, dans lesquelles l'indice de fluidité initial est inférieur à environ 3 g/10 minutes mesuré à 230 °C/2160 g, et la distribution de masse moléculaire du copolymère est inférieure à environ 5,5 ± 10 %.

20. Compositions de copolymère propylène/éthylène comprenant :
i) un copolymère propylène/éthylène comprenant environ 2 à environ 3,5 % en poids d'éthylène ;
ii) environ 300 ppm à environ 500 ppm d'hydrotalcite synthétique ;
iii) environ 800 ppm à environ 1200 ppm d'une bis(alkyl de suif hydrogéné)amine oxydée et de poly{[6-[(1,1,3,3-tétraméthylbutyl)amino]-1,3,5-triazine-2,4-diyl][(2,2,6,6-tétraméthyl-4-pipéridinyl)imino]-1,6-hexanediyl-[(2,2,6,6-tétraméthyl-4-pipéridinyl)imino]} dans un rapport de 1:1 ;
iv) environ 1600 ppm à environ 2200 ppm d'hydroxybis[2,4,8,10-tétrakis(1,1-diméthyl(éthyl))-6-hydroxy-12H-dibénzo[d,g][1,3,2]dioxaphosphocin-6-oxidato]aluminium ; et
v) une quantité suffisante de 2,5-diméthyl-2,5-di(tert-butylperoxy)hexane pour réduire la viscosité du polymère résultant à un indice de fluidité d'environ 23 à environ 31 g/10 minutes mesuré à 230 °C/2160 g.

21. Compositions de copolymère propylène/éthylène selon la revendication 20, dans lesquelles le copolymère propylène/éthylène est un copolymère statistique polymérisé en présence d'un catalyseur de Ziegler-Natta comprenant environ 2,6 à environ 3,2 % en poids d'éthylène.

22. Compositions de copolymère propylène/éthylène selon la revendication 21, dans lesquelles l'indice de fluidité initial est inférieur à environ 3 g/10 minutes mesuré à 230 °C/2160 g, et la distribution de masse moléculaire du copolymère est inférieure à environ 5,5 ± 10 %.

23. Ensemble seringue comprenant un corps de seringue et un piston de seringue adapté pour se déplacer à l'intérieur dudit corps, dans lequel ledit corps et éventuellement ledit piston sont fabriqués à partir d'une composition de copolymère propylène/éthylène selon la revendication 1.

24. Ensemble seringue comprenant un corps de seringue et un piston de seringue adapté pour se déplacer à l'intérieur dudit corps, dans lequel ledit corps et éventuellement ledit piston sont fabriqués à partir d'une composition de copolymère propylène/éthylène selon la revendication 17.

25. Ensemble seringue comprenant un corps de seringue et un piston de seringue adapté pour se déplacer à l'intérieur dudit corps, dans lequel ledit corps et éventuellement ledit piston sont fabriqués à partir d'une composition de copolymère propylène/éthylène selon la revendication 20.
